(19) Europäisches Patentamt
European Patent Office
Office européen des brevets

(11) Publication number: **0 465 924 A2**

(12) **EUROPEAN PATENT APPLICATION**

(21) Application number: **91110501.3**

(22) Date of filing: **25.06.91**

(51) Int. Cl.[5]: **C08L 69/00**, C08L 67/02, //(C08L69/00,67:02),(C08L67/02, 69:00)

(30) Priority: **10.07.90 US 550918**

(43) Date of publication of application: **15.01.92 Bulletin 92/03**

(84) Designated Contracting States: **DE ES FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mount Vernon, Indiana 47620(US)**
Inventor: **Fontana, Luca Pietro**
**1400 Crescent Court**
**Evansville, Indiana 47712(US)**
Inventor: **Patterson, Dwight Juan**
**7303 West Vernon Drive**
**Evansville, Indiana 47712(US)**
Inventor: **Pratt, Charles Franklyn**

**B-2130 Brasschaat(BE)**
Inventor: **Morioka, Masataka General Electric Plastics JA LTD**
**2-2 Kinugaoka Moka-shi**
**Tochigi-ken 321-53(JP)**
Inventor: **Morgan, Sarah Elizabeth**
**Franciscusberg 53**
**NL-4611 MZ Bergen op Zoom(US)**

(74) Representative: **Catherine, Alain**
**General Electric France Service de Propriété Industrielle 18 Rue Horace Vernet**
**F-92136 Issy-Les-Moulineaux Cedex(FR)**

(54) **Copolyester carbonate-polyester composition.**

(57) A composition comprising an admixture of
(a) a copolyestercarbonate comprising units of the structure

a.

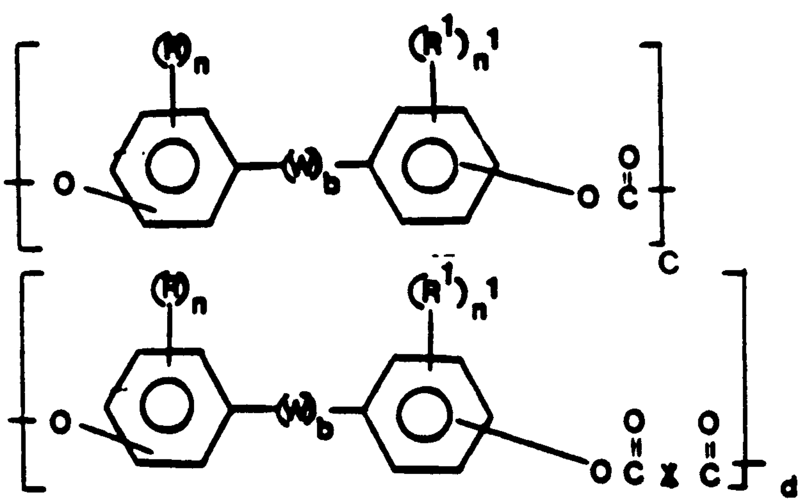

EP 0 465 924 A2

wherein:

R is independently selected from halogen, monovalent hydrocarbon, and monovalent hydrocarbonoxy radicals;

$R^1$ is independently selected from halogen, monovalent hydrocarbon, and monovalent hydrocarbonoxy radicals;

W is selected from divalent hydrocarbon radicals, -S-, -S-S-, -O-,

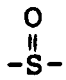, 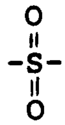, and 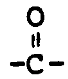

n and $n^1$ are independently selected from integers having a value of from 0 to 4 inclusive;

b is either zero or one;

X is an aliphatic group of about 6 to 18 carbon atoms, inclusive;

d is from about 2 to 30 mole percent of the total units c + d; and

(b) a polyester in quantities sufficient to improve chemical resistance of the copolyestercarbonate, and optionally

(c) an impact modifier composition comprising an impact modifier which improves the impact properties of aromatic polycarbonate, said impact modifier composition present in quantities which improve the impact properties of the said copolyestercarbonate.

## BACKGROUND OF THE INVENTION

Polycarbonates are well known amorphous polymers having properties of transparency, toughness, and impact resistance. However they are also known for their high melt viscosity and relatively poor resistance to organic solvents. These characteristics make the polycarbonate relatively difficult to process because of the high temperature and the amount of work required. After the part is molded, some care should generally be taken to avoid contact with organic solvents since stress crazing and cracking can occur which significantly weakens the molded article.

In the past few years, various blends of polycarbonate with other polymers have met with substantial success. By blending small quantities of certain polymers with polycarbonate, better thick section and low temperature impact resistance have been achieved. Such blends have been successfully molded into automotive instrument panels. Of perhaps even greater significance, automotive parts requiring excellent low temperature impact resistance and organic chemical resistance have been molded from polycarbonate blends. These blends have been molded into large parts such as automotive bumpers. They have been generally marketed under the trademark XENOY® resin of General Electric Company and have been quite successful. However as the demands of various applications increase and the molded parts become more intricately designed, it has become increasingly important to have these blends more readily processable, that is, more free flowing than before, and preferably moldable at a lower temperature as well. In this manner, the more intricately shaped molds can be filled completely accompanied with little risk to blend component decomposition.

A new copolyestercarbonate has been discovered. This polymer has aliphatic ester units and aromatic carbonate units. When admixed with polyesters and, optionally, impact modifiers known to impact modify standard polycarbonates, particularly rubbery impact modifiers, the copolyestercarbonate containing blends maintain its significant properties, for example, impact and organic solvent resistance but is processable at a lower temperature and with less work because of its lower melt viscosity.

## SUMMARY OF INVENTION

In accordance with the invention, there is a composition comprising an admixture of

(a) a copolyestercarbonate comprising units of the structure

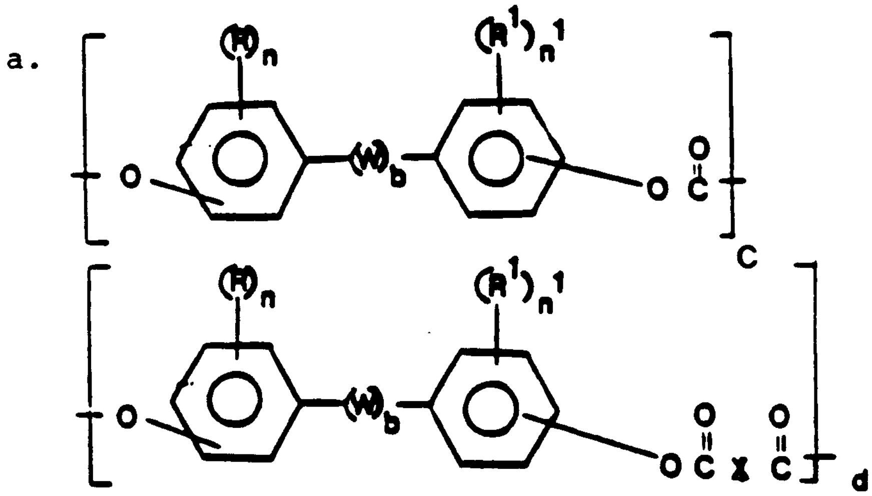

wherein:

R is independently selected from halogen, monovalent hydrocarbon, and monovalent hydrocarbonoxy radicals;

$R^1$ is independently selected from halogen, monovalent hydrocarbon, and monovalent hydrocarbonoxy radicals;

W is selected from divalent hydrocarbon radicals, -S-, -S-S-, -O-,

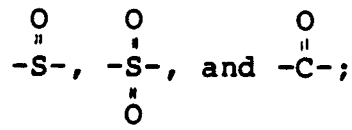

n and $n^1$ are independently selected from integers having a value of from 0 to 4 inclusive;
b is either zero or one;
X is an aliphatic group of about 6 to 18 carbon atoms, inclusive;
d is from about 2 to 30 mole percent of the total units c + d; and
(b) a polyester, and optionally
(c) an impact modifier composition comprising an impact modifier which improves the impact properties of aromatic polycarbonate, said impact modifier composition present in quantities which improve the impact properties of the said copolyestercarbonate.

It is preferred that the impact modifier be rubbery such as an acrylate or dienic rubber for example a polymer having a polymerized dienic portion, such as polymerized butadiene. It is more preferred that the impact modifier be an ABS or an MBS.

A further aspect of the invention is a composition comprising an admixture of
a. an aromatic copolyestercarbonate comprising from about 2 to 30 mole percent ester content of an alpha omega aliphatic dicarboxylic acid ester having from about 8 to 20 carbon atoms, inclusive,
b. a polyester in quantities sufficient to improve chemical resistance of the copolyestercarbonate and, optionally
(c) an impact modifier composition comprising an impact modifier which improves the impact properties of aromatic polycarbonate, said impact modifier composition present in quantities which improve the impact properties of the said copolyestercarbonate and polyester.

DETAILED DESCRIPTION OF THE INVENTION

Dihydric phenols which are useful in preparing the copolyestercarbonate of the invention may be represented by the general formula

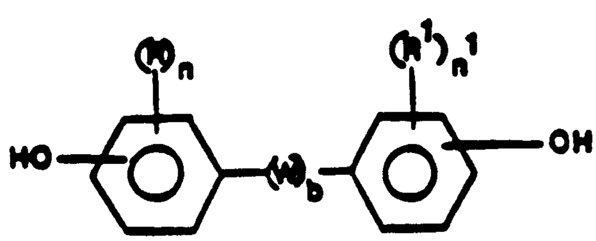

wherein:
R is independently selected from halogen, monovalent hydrocarbon, and monovalent hydrocarbonoxy radicals;
$R^1$ is independently selected from halogen, monovalent hydrocarbon, and monovalent hydrocarbonoxy radicals;
W is selected from divalent hydrocarbon radicals, -S-, -S-S-, -O-,

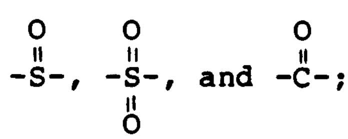

n and $n^1$ are independently selected from integers having a value of from 0 to 4 inclusive; and
b is either zero or one.

The monovalent hydrocarbon radicals represented by R and $R^1$ include the alkyl, cycloalkyl, aryl, aralkyl and alkaryl radicals. The preferred alkyl radicals are those containing from 1 to about 12 carbon atoms. The

preferred cycloalkyl radicals are those containing from 4 to about 8 ring carbon atoms. The preferred aryl radicals are those containing from 6 to 12 ring carbon atoms, i.e., phenyl, naphthyl, and biphenyl. The preferred alkaryl and aralkyl radicals are those containing from 7 to about 14 carbon atoms.

The preferred halogen radicals represented by R and $R^1$ are chlorine and bromine.

The divalent hydrocarbon radicals represented by W include the alkylene, alkylidene, cycloalkylene and cycloalkylidene radicals. The preferred alkylene radicals are those containing from 2 to about 30 carbon atoms. The preferred alkylidene radicals are those containing from 1 to about 30 carbon atoms. The preferred cycloalkylene and cycloalkylidene radicals are those containing from 6 to about 16 ring carbon atoms. The monovalent hydrocarbonoxy radicals represented by R and $R^1$ may be represented by the formula - $OR^2$ wherein $R^2$ is a monovalent hydrocarbon radical of the type described hereinafore. Preferred monovalent hydrocarbonoxy radicals are the alkoxy and aryloxy radicals.

Some illustrative non-limiting examples of the dihydric phenols falling within the scope of Formula II include:

2,2-bis(4-hydroxyphenyl)propane (bisphenol-A);
2,2-bis(3,5-dibromo-4-hydroxyphenyl)propane;
2,2-bis(3,5-dimethyl-4-hydroxyphenyl)propane;
1,1-bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;
4,4 -dihydroxydiphenyl ether;
4,4 -thiodiphenol;
4,4 -dihydroxy-3,3 -dichlorodiphenyl ether; and
4,4 -dihydroxy-2,5-dihydroxydiphenyl ether.

Other useful dihydric phenols which are also suitable for use in the preparation of the above polycarbonates are disclosed in U.S. Patent Nos. 2,999,835; 3,028,365; 3,334,154; and 4,131,575, all of which are incorporated herein by reference. Preferred dihydric phenols are the 2,2-bis materials, particularly bisphenol-A.

The carbonate precursor utilized in the invention can be any of the standard carbonate precursors such as phosgene, diphenyl carbonate and the like. When using an interfacial process or a bischloroformate process it is also preferred to use a standard catalyst system well known in the synthesis of polycarbonates and copolyestercarbonates. A typical catalyst system is that of an amine system such as tertiaryamine, amidine or guanidine. Tertiaryamines are generally employed in such reactions. Trialkylmines such as triethylamine are generally preferred.

The monomer which supplies the ester units in the copolyestercarbonate is an aliphatic alpha omega dicarboxylic acid or ester precursor from 8 to about 20 carbon atoms preferably 10 to 12 carbon atoms. The aliphatic system is normal, branched or cyclic. Examples of the system include azelaic acid (C9), sebacic acid (C10) dodecanedioic acid C12, C14, C18 and C20 diacids. The normal saturated aliphatic alpha omega dicarboxylic acids are preferred. Sebacic and dodecanedioic acid are most preferred. Mixtures of the diacids can also be employed. It should be noted that although referred to as diacids, any ester precursor can be employed such as acid halides, preferably acid chloride, diaromatic ester of the diacid such as diphenyl, for example the diphenylester of sebacic acid. With reference to the carbon atom number earlier mentioned, this does not include any carbon atoms which may be included in the ester precursor portion, for example diphenyl.

The copolyestercarbonates of the invention can be prepared by the known methods, for example those appearing in Quinn 4,238,596 and Quinn and Markezich 4,238,597. Examples of such processes include the formation of acid halides prior to the reaction of the ester forming group with the dihydric phenol and then followed by phosgenation. Still further, the basic solution process of Goldberg in the 3,169,121 reference utilizing a pyridine solvent can also be employed while also using the dicarboxylic acid per se. A melt process utilizing the diesters of the alpha omega dicarboxylic acids can also be employed. An example of such a compound is the diphenylester of sebacic acid.

After substantial experimentation, it has been found that a preferred process for making the copolyestercarbonates of this invention exists. The process of Kochanowski, USP 4,286,083 (083) was initially utilizied and then improved upon. It was found that lower diacids such as adipic acid were not incorporated into the polymer backbone to any great extent. Rather, one had to go up to higher carbon atom dicarboxylic acids before any significant incorporation of diacid into the backbone was observed. We have found that the

diacid is preferentially introduced as the preformed salt, preferably an alkali metal such as sodium into the interfacial reaction reactor. The dihydric phenol can be already present. The water phase is maintained at an alkaline pH preferably from about 8 to 9 for most of the phosgenation period and then raising the pH to a level of about 10 to 11 for the remainder of the phosgenation time period which is generally a minimum of 5%.

In order to control molecular weight, it is standard practice to utilize a chain stopping agent which is a monofunctional compound. This compound when reacting with the appropriate monomer provides a nonreactive end. Therefore the quantity of chain stopping compound controls the molecular weight of the polymer. Bulkier chain terminators than phenol should provide better retention of physical properties when thermally aged, such as low temperature impact. Examples of these bulkier substituents include paratertiarybutylphenol, isononyl phenol, isooctyl phenol, cumyl phenols such as meta and paracumyl phenol, preferably paracumyl phenol, as well as chromanyl compounds such as Chroman I.

The copolyestercarbonate of this invention with the standard endcapping reagent possesses a substantially lowered glass transition temperature, Tg, therefore providing processability at a lower temperature. Surprisingly accompanying this low temperature processability are substantially equivalent physical properties as a standard polycarbonate of the same intrinsic viscosity as the inventive composition and very high flow rates.

The aliphatic alpha omega dicarboxylic acid ester is present in the copolyestercarbonate in quantities from about 2 to 30 mole percent, based on the dihydric phenol. Generally with quantities below about 2 mole percent the Tg is insufficiently lowered and significantly altered flow rate is not observed. Above about 30 mole percent, the physical properties of the copolyestercarbonate are significantly hindered in comparison to the polycarbonate without the aliphatic ester linkages. Preferred mole percents of aliphatic alpha omega dicarboxylic acid ester are from about 5 to 25 and more preferably about 7 to 20 mole percent of the dihydric phenol.

The weight average molecular weight of the copolyestercarbonate can generally vary from about 10,000 to about 100,000 as measured by GPC. Using a polystyrene standard, corrected for polycarbonate. A preferred molecular weight is from about 18,000 to about 40,000.

The copolyestercarbonate has units of the structure

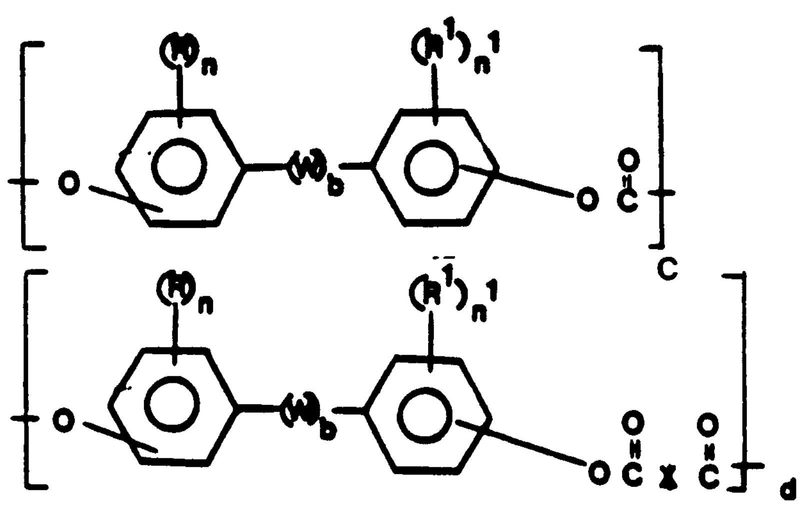

Figure 2

where R, $R^1$, n, $n^1$, W and b have been previously described and X is an aliphatic grouping of about 7 to about 18 carbon atoms, inclusive. The d repeating unit is present in the copolyestercarbonate in from about 2 to 30 mole percent of the total of the repeating units c + d, X is preferably about 10 to 18 carbon atoms, inclusive. The aliphatic system is preferably saturated and is normal, branched, cyclic or alkylene substituted cyclic. The mole percent of d is preferably about 5 to 25 and more preferably about 7 to 20 mole percent. For example, when 5 moles of bisphenol-A reacts completely with 4 moles of phosgene and 1 mole of dodecanedioic acid, the resulting copolyestercarbonate is said to have 20 mole percent ester content. That is, the d unit is 20 mole percent of the c + d units.

The preferred polyesters for use in the instant invention generally contain at least one recurring structural unit represented by the general formula

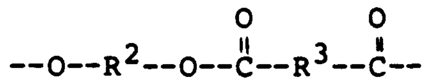

wherein $R^2$ and $R^3$ are independently selected from divalent hydrocarbon radicals or substituted divalent hydrocarbon radicals.

The aliphatic aromatic polyesters are those wherein one of $R^2$ or $R^3$ is a divalent aromatic radical and one of $R^2$ or $R^3$ is a divalent aliphatic radical. Preferred aliphatic aromatic polyesters are those wherein $R^2$ is a divalent aliphatic radical or substituted divalent aliphatic radical and $R^3$ is a divalent aromatic radical or a substituted divalent aromatic radical.

One class of particularly useful aliphatic aromatic polyesters are the polyalkylene terephthalates or polyalkylene isophthalates. These types of polyesters contain at least one recurring structural unit represented by the general formula

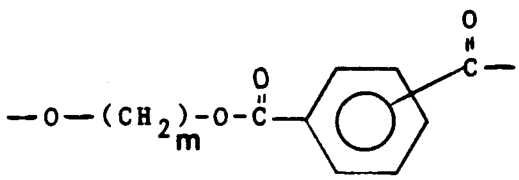

IIIb

wherein m is a whole number having a value of from 2 to 6 inclusive. Especially preferred polyesters of Formula IIIb are polyethylene terephthalate and poly(1,4-butylene terephthalate).

A further class of useful aliphatic aromatic esters are those containing cycloalkylene grouping, for example, cyclopentyl diol, cyclohexane 1,4-diol and 1,4-cyclohexane dimethanol. Particularly useful aliphatic aromatic polyesters are polyester copolymers or copolyesters which can, without limitation, comprise the reaction products of: (a) a dicarboxylic acid portion comprising terephthalic acid, isophthalic acid, or mixtures thereof; or (b) a glycol portion comprising a 1,4-cyclohexanedimethanol and ethylene glycol wherein the molar ratio of the 1,4-cyclohexanedimethanol to the ethylene glycol portion is from about 0 to about 100 percent, preferably about 4:1 to about 1:4, with an acid portion comprising terephthalic acid, isophthalic acid, or mixtures thereof.

These types of copolyesters may be prepared by procedures well known in the art, such as by condensation reactions substantially as shown and described in U.S. Pat. No. 2,901,466 which is hereby incorporated herein by reference. More particularly, the acid or mixtures of acids or alkyl esters of the aromatic dicarboxylic acid or acids, for example, dimethylterephthalate, together with the dihydric alcohols are charged to a flask and heated to a temperature sufficient to cause condensation of the copolymer to begin, for example 175°-225°C. Thereafter the temperature is raised to about 250° to 300°C., and a vacuum is applied and the condensation reaction is allowed to proceed until substantially complete.

The condensation reaction may be facilitated by the use of a catalyst, with the choice of catalyst being determined by the nature of the reactants. The various catalysts for use herein are very well known in the art and are too numerous to mention individually. Generally, however, when an alkyl ester of the dicarboxylic acid compound is employed, an ester interchange type of catalyst is preferred, such as NaH $Ti(OC_4H_9)_6$ in n-butanol. If a free acid is being reacted with free glycols, a catalyst is generally not added until after the preliminary condensation has gotten under way.

The reaction is generally begun in the presence of an excess glycols and initially involves heating to a temperature sufficient to cause a preliminary condensation followed by the evaporation of excess glycol. The entire reaction is conducted with agitation under an inert atmosphere. The temperature can be advantageously increased with or without the immediate application of vacuum. As the temperature is further increased, the pressure can be advantageously greatly reduced and the condensation allowed to proceed until the desired degree of polymerization is achieved. The product can be considered finished at this stage or it can be subjected to further polymerization in the solid phase in accordance with well known techniques. Thus, the condensation product can be cooled, pulverized, and heated to a temperature somewhat less than employed during the last stage of molten polymerization thereby avoiding coagulation of the solid particles. The solid phase polymerization is conducted until the desired degree of polymerization is achieved. The solid phase polymerization, among other things, results in a higher degree of polymerization without the accompanying degradation which frequently takes place when continuing the last

stage of the melt polymerization at a temperature high enough to achieve the desired degree of polymerization. The solid phase process is advantageously conducted with agitation employing an inert atmosphere at either normal atmospheric pressure or under greatly reduced pressure.

These copolyesters will generally have an intrinsic viscosity of at least about 0.4 dl/gm as measured in 60/40 phenol/tetrachloroethane or other similar solvents at about 25°C and will have a heat distortion temperature from about 50° to about 70° (264 psi). The relative amounts of the 1,4-cyclohexanedimethanol to ethylene glycol in the glycol portion of the copolyester (b) may vary so long as the molar ratio of 1,4-cyclohexanedimethanol to ethylene glycol is preferably from about 1:4 to 4:1, in order to provide a polyester copolymer having a suitable heat distortion temperature within the recited range, and other suitable properties.

One quite useful type of copolyester is a copolyester of the type described hereinafore wherein the glycol portion has a predominance of ethylene glycol over 1,4-cyclohexanedimethanol, for example greater than 50/50 and especially preferably is about 70 molar ethylene glycol to 30 molar 1,4-cyclohexanedimethanol, and the acid portion is terephthalic acid. A preferred copolyester of this type is commercially available under the trade name KODAR PETG 6763 from Eastman Chemical Co. A preferred copolyester is one derived from 1,4-cyclohexanedimethanol as the glycol portion and a mixture of isophthalic and terephthalic acids as the acid portion. This type of copolyester is available from Eastman Chemical Co. under the trade name KODAR A150. Another preferred type of polyester is one wherein the glycol units are predominantly 1,4-cyclohexane dimethanol, on a molar basis the remainder being ethylene glycol.

Any material known to impact modify aromatic polycarbonate, particularly polycarbonate derived from bisphenol A, should be useful in upgrading the impact properties of the aromatic copolyester carbonate and polyester admixture of this invention. Examples of these impact modifiers include but are not limited to the following general categories:

polyacrylates
polyolefins
rubbery dienic polymers
styrenic polymers

The polyacrylates which can be employed as impact modifiers are rubbery homopolymers or copolymers. In general the polyalkyl acrylates described in Brinkmann et al., U.S. Pat. No. 3,591,659 incorporated by reference, can be used, especially those containing units derived from alkyl acrylates, particularly n-butyl acrylate. Acrylate containing copolymers wherein the other monomer is, for example, derived from a methacrylate are also readily employable, see for example Japanese Patent Application Announcement 1968-18611, incorporated by reference. Preferably the acrylate resin will be in the form of a rubber-elastic graft copolymer having a glass transition temperature below about -10°C., preferably below about -20°C. Schlichting, U.S.P. 4,022,748, incorporated by reference. More preferably, the acrylate resin will comprise a multiple stage polymer having a rubbery first stage (core) and a thermoplastic hard final stage (shell), see Farnham U.S.P. 4,096,202, incorporated by reference.

The most preferred acrylate resin is a multiphase composite interpolymer comprised of a $C_{1-5}$ acrylate and a $C_{1-5}$ methacrylate. These interpolymers consist of about 25 to 95 weight percent of a first elastomeric phase polymerized from a monomer system comprising about 75 to 99.8 weight percent of a $C_{1-5}$ alkyl acrylate, 0.1 to 5 percent by weight cross linking monomer, 0.1 to 5 percent by weight of graftlinking monomer, and about 75 to 5 weight percent of a final rigid thermoplastic phase polymerized in the presence of said elastomeric phase.

The crosslinking monomer is a polyethylenically unsaturated monomer having a plurality of addition polymerizable reactive groups all of which polymerize at substantially the same rate of reaction. Suitable crosslinking monomers include polyacrylic and polymethacrylic esters of polyols such as butylene diacrylate and dimethacrylate, trimethylol propane trimethacrylate, and the like; di- and trivinyl benzene, vinyl acrylate and methacrylate, and the like. The preferred crosslinking monomer is butylene diacrylate.

The graftlinking monomer is a polyethylenically unsaturated monomer having a plurality of addition polymerizable reactive groups, at least one of which polymerizing at substantially different rates of polymerization from at least one other of said reactive groups. The function of the graftlinking monomer is to provide a residual level of unsaturation in the elastomeric phase, particularly in the latter stages of polymerization and, consequently, at or near the surface of the elastomer particles.

When the rigid thermoplastic phase is subsequently polymerized at the surface of the elastomer, the residual unsaturated addition polymerizable reactive group contributed by the graftlinking monomer participates in the subsequent reaction so that at least a portion of the rigid phase is chemically attached to surface of the elastomer. Among the effective graft-linking monomers are alkyl group-containing monomers

of alkyl esters of ethylenically unsaturated acids such as allyl acrylate, allyl methacrylate, diallyl maleate, diallyl fumarate, and allyl acid itaconate. Somewhat less preferred are the diallyl esters of polycarboxylic acids which do not contain polymerizable unsaturation. The preferred graftlinking monomers are allyl methacrylate and diallyl maleate.

A most preferred interpolymer has only two stages, the first stage comprising about 60 to 95 percent by weight of the interpolymer and being polymerized from a monomer system comprising 95 to 99.8 percent by weight butyl acrylate, 0.1 to 2.5 percent by weight butylene diacrylate as crosslinking agent, 0.1 to 2.5 percent by weight allyl methacrylate or diallyl maleate as a graftlinking agent, with a final stage polymerized from about 60 to 100 percent by weight methyl methacrylate. The multiphase composite interpolymers Acryloids KM-330 EXL 2330 available from Rohm and Haas are preferred. These interpolymers are comprised of small quantities of cross linking and graft linking monomers, about 80 weight percent n-butyl acrylate and about 20 weight percent methyl methacrylate.

Also available for use in the inventions are an ABS or ABS type compositions. Useful compositions comprise graft polymers obtained by grafting 5 to 90 parts by weight of a mixture of

a. 50-95 parts by weight styrene, $\alpha$-methylstyrene, methyl nuclear substituted styrene (particularly para substituted), methylmethacrylate or mixtures thereof and

b. 50 to 5 parts by weight acrylonitrile, methacrylonitrile, methylmethacrylate, maleic anhydride, N-substituted maleimide or mixtures thereof, unto

c. 95 to 10 parts by weight of a rubber having a glass transition temperature, Tg, of <10°C. The rubber may be replaced with up to about 50 wt.% of the styrenic listed in (a) above. Preferably the graft polymers contains at least 30 wt.%, more preferably at least 50 wt.% of the rubber. Generally, the rubber is polymerized butadiene or isoprene, preferably butadiene. Of course, some free copolymers of (a) and (b) above are present in the graft polymer. The preferred resins are graft copolymers of acrylonitrile butadiene styrene (ABS) or methylmethacrylate butadiene styrene (MBS). With respect to MBS a preferred configuration is core/shell. These resins may be made by any of the well known methods including emulsion polymerization, suspension polymerization, bulk polymerization, or bulk suspension polymerization as well as typically well known methods directed to the core/shell preparations.

The polyolefins which can be employed as impact modifiers are homopolymers or copolymers. Examples of the homopolymers include polyethylene, polypropylene, polybutene-1, polyhexene and the like. The polymers include the standard high density polymers, low density polymers as well as the newer linear low density polyolefins such as the linear low density polyethylene made with butene-1 or octene-1. Other examples of copolymers containing at least one olefin monomer can be employed. For example copolymers of ethylene and propylene can be employed as the impact modifier as well as a copolymer of an olefin and an acrylate such as ethylene ethyl acrylate, a copolymer available from Union Carbide as DPD-6169. Other higher olefin monomers can be employed as copolymers with alkyl acrylates, for example propylene and n-butyl acrylate and the like. These polyolefins polymers can also be reacted with rubbery dienes so as to form terpolymers of the EPDM family such as ethylene propylene diene terpolymers, for example Epsyn 704 available from Copolymer Rubber and EPDM grafted SAN (Royaltuff 372-P).

The EPDM copolymers may be readily prepared by known methods. They may be prepared by the reaction of an olefin with a rubbery diene. The olefins which may be reacted with the dienes are the known olefins as described hereinafore, preferably the lower olefins such as ethylene, propylene, butylene, and the like. The dienes include the known dienes such as the norbornenes such as ethylidene norbornene, butadiene, pentadiene, isoprene, cyclopentadiene, cyclohexadiene, and the like. Preferred olefin-diene polymers are the terpolymers formed by the reaction of two olefins with a diene. Particularly useful terpolymers are those of the EPDM family such as ethylene propylene diene terpolymers. Some illustrative non-limiting examples of the EPDM type terpolymers include ethylene propylene norbornene, ethylene propylene ethylidene norbornene, ethylene propylene pentadiene, ethylene propylene cyclopentadiene, and the like. These EPDM type terpolymers are well known in the art and are generally commercially available from several sources such as, the aforementioned Epsyn 704 from Copolymer Rubber, and the Vistalon Series from Exxon Chemicals such as Vistalon 3708, Vistalon 2504, and the like.

Also available as impact modifiers are various styrenic polymers. Examples of these polymers include non hydrogenated or selectively hydrogenated linear, sequential or radical teleblock copolymers. These materials are well known in the art, generally commercially available or may readily be prepared by known methods.

Prior to hydrogenation the end blocks of these polymers comprise homopolymers or copolymers preferably prepared from alkenyl aromatic hydrocarbons and particularly vinyl aromatic hydrocarbons wherein the aromatic moiety may be either monocyclic or polycyclic. Typical monomers include styrene, alpha-methyl styrene, p-methyl styrene, vinyl xylene, ethyl vinyl xylene, vinyl naphthylene, and the like, or

mixtures thereof. The end blocks (A) and (A') may be the same or different. They are preferably selected from styrene, alpha-methyl styrene, vinyl toluene, vinyl xylene, vinyl naphthylene, and especially styrene. The center block (B) may be derived from, for example, butadiene, isoprene, 1,3-pentadiene, 2,3-dimethylbutadiene, and the like, and it may have a linear, sequential or teleradial structure.

The selectively hydrogenated linear block copolymers are described in Haefel et al., US. Pat. No. 3,333,024, which is incorporated herein by reference.

The ratio of the copolymers and the average molecular weights can vary broadly, although the molecular weight of the center block should be greater than that of the combined terminal blocks. It is preferred to form terminal block A each having a weight average molecular weight of about 2,000 to about 60,000 and center block B, e.g., a hydrogenated polybutadiene block, with a weight average molecular weight of about 20,000 to 450,000. Still more preferably, the terminal blocks each have a weight average molecular weight of about 7,000 to about 35,000 while the hydrogenated polybutadiene polymer blocks have a weight average molecular weight between about 30,000 and 150,000. The terminal blocks will preferably comprise from about 20 to about 45% by weight, more preferably from about 25 to about 40% by weight of the total block polymer. The preferred copolymers will be those having a polybutadiene center block wherein from about 35 to about 55% of the butadiene block segment is the structure resulting from 1,2 addition.

The hydrogenated copolymer will have the average unsaturation reduced to less than 20% of the original value. It is preferred to have the unsaturation of the center block B reduced to 10%, or less, preferably 5%, or less, of its original value. After hydrogenation center blocks B derived from isoprene will have the ethylene butylene structure.

The block copolymers are formed by techniques well known to those skilled in the art. Hydrogenation may be conducted utilizing a variety of hydrogenation catalysts such as nickel on kieselguhr, Raney nickel, copper chromate, molybdenum sulfide and finely divided platinum or other noble metals on a low surface area carrier.

Hydrogenation may be conducted at any desired temperature or pressure, e.g., from atmospheric to about 3000 psig. The usual range being between 100 and 1,000 psig at temperatures from 75°C to 600°F for times between 0.1 and 24 hours, preferably from 0.2 to 8 hours.

Hydrogenated block copolymers such as Kraton G-1650 and Kraton G-1651 from Shell Chemical Company, Polymers Division, have been found useful in the present invention. Also useful are the Solprenes from Phillips.

The radial teleblock copolymers of which the Solprenes are typical examples can be characterized as having at least three polymer branches with each branch of the radical block copolymer comprising terminal non-elastomeric segments, e.g. (A) and (A'), as defined hereinafore. The branches of the radial block polymer contain a terminal non-elastomeric segment attached to an elastomeric polymer segment, e.g.(B) as defined hereinafore. These are described in Marrs, U.S. Pat. No. 3,753,936 and in Zelinski, U.S. Pat. No. 3,281,383, both of which are incorporated herein by reference, and they are selectively hydrogenated by well known procedures. In any event, the term "selective hydrogenation" is used herein to contemplate polymers in which the non-elastomeric blocks (A) and (A') have been left unhydrogenated, i.e., aromatic.

Further examples of impact modifiers which can be employed include the polycarbonate/polysiloxane random copolymers. Examples of such polymers include those in disclosures of USP 3,189,662 issued to Vaughn and assigned to GE as well as USP 4,027,072, USP 4,123,588 issued to Molari and assigned to GE and USP 4,735,999 issued to Patterson and assigned to GE. All these patents are incorporated by reference into this disclosure.

Other known impact modifiers include various elastomeric materials such as, organic silicone polymers, organic silicone polysiloxane polymers, elastomeric fluorohydrocarbons, elastomeric polyesters and the like.

As previously mentioned, the preferred impact modifiers are rubbery. In general the previously mentioned acrylates, ABS and MBS resins are more preferred.

Other polymers may also be present, for example, standard aromatic polycarbonate resin can also be present. The presence of the polycarbonate brings about higher thermal properties, accompanied by processing which becomes closer to the standard polycarbonate depending upon the quantity of standard polycarbonate in the admixture. A further example of a polymer which may be present in the admixture, particularly where there is present ABS or MBS type graft polymer (rubbery dienic type polymers) is the copolymer comprised of the monomers grafted onto the rubber. For example copolymers prepared from the polymerization of (a) 50 to 95 parts by weight styrene, -methylstyrene, methyl nuclear substituted styrene (particularly para substituted), methylmethacrylate or mixtures thereof and (b) 50 to 5 parts by weight acrylonitrile, methacrylonitrile, methylmethacrylate, maleic anhydride, N substituted maleic imide or mixtures thereof are particularly useful. Particularly preferred are styrene acrylonitrile copolymers.

The quantities of the blends constituents can vary widely. Based on the quantity of the two polymers, the copolyestercarbonate and the polyester, the copolyestercarbonate can vary from about 1 to about 95 wt.% of the composition, preferably about 5 to about 90 wt.% of the composition. The polyester can vary from about 5 to about 99 wt.% of the composition, preferably about 10 to about 95 wt.% of the composition. Generally from about 60-95 wt.% copolyestercarbonate is employed. Based on the quantity of the copolyestercarbonate, impact modifier and polyester, the quantity of copolyester- carbonate can vary from about 20 to about 90 weight percent, preferably about 40 to about 80 weight percent. The polyester can vary from about 10 to about 80 weight percent, preferably about 20 to 50 weight percent. The impact modifier can vary from about 4 to 40 weight percent, preferably about 5 to 30 weight percent.

The composition of the invention may be compounded in the usual manner, for example blending the copolyestercarbonate with the impact modifier and polyester in dry form, for example powder or granules and the like and then extruding the composition.

The following examples are illustrative of the invention and are not intended to narrow the broad inventive concept.

Example 1

A control composition consisting of bisphenol-A polycarbonate, 45 wt.%, polybutylene terephthalate 39 wt.% and 15 wt.% impact modifier was prepared. A comparable composition having the same wt.% components was prepared except that instead of polycarbonate, a bisphenol-A copolyestercarbonate having 10 mole % dodecanedioate was employed. In each composition was 0.2 wt.% of a hindered phenol, 0.35 wt.% of a phosphite, 0.08 wt.% phosphorous acid and 0.4 wt.% of a thio compound.

The polycarbonate had a Kasha Index (K.I., a measurement of melt viscoisty see USP 4,465,820, column 4, lines 16-35) 6 minutes of 3400. The bisphenol-A copolyestercarbonate had a KI 6 minutes of 2700. The bisphenol-A polycarbonate had an intrinsic viscosity (I.V.) at 25°C in methylene chloride at 25°C of 0.490. The bisphenol-A copolyestercarbonate had an I.V. of 0.574.

Various impact modifiers were employed at the 15% wt.% level:

KM653 is a methylmethacrylate/butadiene/styrene polymer obtained from Rohm and Haas.

KM330 is a core shell n-butylacrylate core (80 wt.%) methylmethacrylate shell (20 wt.%) with small quantities of graft and cross linking monomers available from Rohm and Haas.

BLX 338 is 7.5 wt.% acrylonitrile, 22.5 wt.% styrene, 70 wt.% butadiene available from GE.

FT-80 is a polybutadiene modified acrylic copolymer available from Kaneka, Texas.

KG-1651 is a selectively hydrogenated triblock styrene/butadiene/styrene polymer available from Shell.

The composition components were admixed and extruded at 260°C barrel set temperature using a 2.5 inch single screw extruder. Molding occurred at a cylinder set temperature of 249°C.

The molded articles were tested for Notched Izod 3.2nm according to ASTMD256 and reported in kg-cm/cm.

The tensile yield and elongation as well as the flexural modulus and strength were measured according to ASTMD683.

Vicat B is measured at 120°C.

PC identifies to the polycarbonate composition.

PEC identifies the copolyestercarbonate composition.

Below are the results:

| Properties | KM 653 PC | KM 653 PEC | KM 330 PC | KM 330 PEC | BLX 338 PC | BLX 338 PEC | FT-80 PC | FT-80 PEC | KG 1651 PC | KG 1651 PEC |
|---|---|---|---|---|---|---|---|---|---|---|
| Notched Izod (Kg-cm/cm) | 74.0 | 75.7 | 81.1 | 91.4 | 78.4 | 81.1 | 79.5 | 84.9 | 82.2 | 88.2 |
| D/B Transition °C | -55 | -45 | -30 | -25 | -55 | -45 | -25 | -15 | -5 | -5 |
| Tensile Yield ($Kg/cm^2$) | 506 | 457 | 492 | 464 | 478 | 471 | 548 | 506 | 443 | 387 |
| Tensile Elongation | 160 | 200 | 150 | 150 | 160 | 160 | 180 | 120 | 90 | 170 |
| Flexural Modulus ($Kg/cm^2$) | 20400 | 19700 | 19700 | 19000 | 19700 | 20400 | 22500 | 21800 | 19700 | 16900 |
| Flexural Strength ($Kg/cm^2$) | 816 | 745 | 780 | 738 | 745 | 766 | 886 | 816 | 717 | 640 |
| Vicat B | 123 | 105 | 115 | 103 | 112 | 105 | 122 | 96 | 109 | 97 |
| Melt Viscosity (pa-sec) | | | | | | | | | | |
| 110/sec 260°C | 900 | 520 | | | 820 | 540 | | | | |
| 150/sec 260°C | 310 | 200 | | | 290 | 210 | | | | |

As shown by the data, the composition of the invention demonstrates substantially higher processability as shown by melt viscosity while maintaining essentially equivalent physical properties except for Vicat. This decrease in the thermal properties is expected due to the aliphatic portion of the molecule, lowered Tg. The ductile/brittle transition temperature is decreased somewhat in the compositions of the invention. However a D/B transition of -45°C in preferred compositions still demonstrates substantial low temperature impact resistance.

Example 2

As shown in the next set of experiments, the D/B transition temperature is a function of processing temperatures. The same weight percent polymer compositions were prepared as in Example 1 but using only KM 653 as the compact modifier. The additive package was 0.05 wt.% phosphite, 0.2 wt.% hindered phenol and 0.08 wt.% 45% aqueous phosphorous acid. The bisphenol-A polycarbonate had a $\overline{Mw}$ of 27,700. The bisphenol-A copolyestercarbonate had a $\overline{Mw}$ of 30,300.

The components were extruded on a twin screw extruder and the Izod bars used for D/B transition molded at 260°C.

| Extruder Barrel SET°C | Extruder Screw Speed (RPM) | D/B Transition °C PC | D/B Transition °C PEC | KI 6 min at 250°C PC | KI 6 min at 250°C PEC |
|---|---|---|---|---|---|
| 243 | 250 | -55 | -55 | 14370 | 8230 |
| 243 | 500 | <-60 | <-60 | 13910 | 6680 |
| 266 | 250 | -55 | -40 | 12320 | 6690 |
| 266 | 500 | -50 | -40 | 8290 | 3940 |

The data demonstrates that D/B transition temperature remains essentially the same when the extrusion temperature was lowered from 266°C to 243°C. The advantageous lower melt viscosity was maintained for the composition of the invention.

Example 3

The composition and additive package of Example 2 were repeated. Bisphenol-A copolyestercarbonates (10 mole % dodecanedioate) of varying $\overline{Mw}$ were used in the invention compositions.

| | $\overline{Mw}$ |
|---|---|
| PC | 27,700 |
| PEC | |
| A | 26,400 |
| B | 29,800 |
| C | 33,500 |

The compositions were extruded in a twin screw extruder at 260°C and parts molded at 260°C. Notched Izod was measured in 3.2nm thickness according to ASTMD256 (all breaks were 100% ductile except those at -50°C which were 0% ductile). KI of the compositions was measured at 6 minutes at 250°C. Tensile yield, break and elongation were measured according to ASTMD683 and reported in Kg/cm$^2$, kg/cm$^2$ and % respectively.

| | PC | PEC | | |
|---|---|---|---|---|
| Notched Izod | | A | B | C |
| RT | 69.1 | 77.8 | 78.9 | 76.2 |
| -40°C | 52.3 | 55.5 | 61.0 | 56.6 |
| -50°C | 20.7 | 12.0 | 14.7 | 15.8 |
| KI | 10280 | 4720 | 4790 | 5230 |
| Tensile Y | 513 | 450 | 464 | 464 |
| Tensile B | 541 | 506 | 513 | 520 |
| Tensile E | 136 | 174 | 192 | 194 |

The data clearly shows the easier processability of the invention compositions together with the improved tensile elongation. Excellent impact strength was achieved. A ductile/brittle transition temperature between -40 and -50°C was observed for both the PC and PEC systems.

Example 4

Utilizing the same additive systems and quantities as Example 3, compositions were prepared using 60 wt% bisphenol-A polycarbonate or bisphenol-A copolyestercarbonate (10 mole% dodecanedioate), 20 wt.% polybutylene terephthalate and 20% KM653. Extrusion and molding were carried out as in Example 3 utilizing the A,B and C copolyestercarbonates. The same tests as in Example 3 were run. All Notched Izod breaks were 100% ductile. Below are the results:

| | PC | PEC | | |
|---|---|---|---|---|
| Notched Izod | | A | B | C |
| RT | 66.4 | 58.2 | 59.3 | 58.8 |
| -40°C | 50.6 | 47.9 | 48.4 | 49.0 |
| -50°C | 34.8 | 43.0 | 43.0 | 46.8 |
| KI | 15750 | 4830 | 4310 | 5590 |
| Tensile Y | 499 | 415 | 422 | 422 |
| Tensile B | 534 | 408 | 429 | 492 |
| Tensile E | 136 | 112 | 115 | 150 |

As shown by the data, a higher copolyestercarbonate, lower impact modifier quantity composition provides slightly lower impact at room temperature but provides a better ductile/brittle transition temperature than the polycarbonate containing composition. Tensile elongation is improved at the higher $\overline{Mw}$.

**Claims**

**1.** A composition comprising an admixture of

(a) a copolyestercarbonate comprising units of the structure

a. 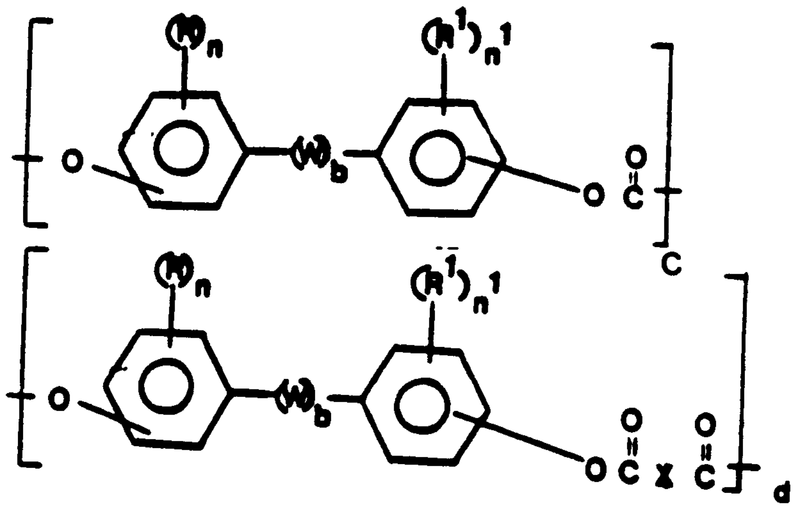

wherein:

R is independently selected from halogen, monovalent hydrocarbon, and monovalent hydrocarbonoxy radicals;

$R^1$ is independently selected from halogen, monovalent hydrocarbon, and monovalent hydrocarbonoxy radicals;

W is selected from divalent hydrocarbon radicals, -S-, -S-S-, -O-,

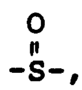, 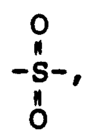, and 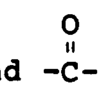

n and $n^1$ are independently selected from integers having a value of from 0 to 4 inclusive;

b is either zero or one;

X is an aliphatic group of about 6 to 18 carbon atoms, inclusive;

d is from about 2 to 30 mole percent of the total units c + d; and

(b) a polyester in quantities sufficient to improve chemical resistance of the copolyestercarbonate, and optionally

(c) an impact modifier composition comprising an impact modifier which improves the impact properties of aromatic polycarbonate, said impact modifier composition present in quantities which improve the impact properties of the said copolyestercarbonate.

2. The composition in accordance with claim 1 wherein n and $n^1$ are both zero, b is 1, the O bond to the ring is para to the W group and W is a divalent hydrocarbon.

3. The composition in accordance with claim 2 wherein X is 7 to 18 carbon atoms.

4. The composition in accordance with claim 3 wherein d is about 7 to 20 mole percent.

5. The composition in accordance with claim 2 wherein the polyester is polyethylene terephthalate, polybutylene terephthalate or a cyclohexanedimethanol containing cycloaliphatic aromatic acid polyester.

6. The composition in accordance with claim 5 where in the polyester is polybutylene terephthalate.

7. The composition in accordance with claim 5 wherein there is no impact modifier present and (a) is bisphenol-A copolyestercarbonate.

**8.** The composition in accordance with claim 6 wherein the polyester is from about 10 to 95 wt.% and copolyestercarbonate is from about 5 to 90 wt.%, the wt.% based on (a) and (b).

**9.** The composition in accordance with claim 6 wherein the copoyestercarbonate is from about 55 to 95 wt.% and the polyester is from about 10 to 45 wt.%.

**10.** The composition in accordance with claim 9 wherein X is 8 to 18 carbon atoms.

**11.** The composition in accordance with claim 5 wherein an impact modifier is present.

**12.** The composition in accordance with claim 11 wherein the polyester is polybutylene terephthalate.

**13.** The composition in accordance with claim 11 wherein the impact modifier is selected from the group consisting of polyacrylate, polyolefin, rubbery dienic polymer, and styrenic polymer and (a) is bisphenol-A copolyestercarbonate.

**14.** The composition in accordance with claim 13 wherein the impact modifier is a polyacrylate.

**15.** The composition in accordance with claim 13 wherein the impact modifier is a polyolefin.

**16.** The composition in accordance with claim 13 wherein the impact modifier is a rubbery dienic polymer.

**17.** The composition in accordance with claim 13 wherein the impact modifier is a styrenic polymer.

**18.** The composition in accordance with claim 16 wherein the rubbery dienic polymer is an ABS.

**19.** The composition in accordance with claim 16 wherein the rubbery dienic polymer is an ABS.

**20.** The composition in accordance with claim 13 wherein the impact modifier is about 5 to 30 wt.% of (a), (b) and (c).

**21.** The composition in accordance with claim 13 wherein (a) is about 20-80 wt.%, (b) is about 10 to 90 wt.% and (c) is about 4-40 wt.% of (a), (b) and (c).

**22.** The composition in accordance with claim 2 wherein (a) is about 40 to 80 wt.%, (b) is about 20 to 50 wt.% and (c) is about 5 to 30 wt.%.